# EUROPEAN PATENT APPLICATION

(11) **EP 4 776 668 A1**
(43) Date of publication of application: **15.07.2026**
(21) Application number: 23951490.4
(22) Date of filing: 06.09.2023
(51) Int. Cl.: H04W 12/069, H04W 76/10, H04W 84/06

(54) **NETWORK NODE, TERMINAL, AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SASAGAWA, Tetsuhiro, Tokyo 100-6150 (JP); HIKOSAKA, Maoki, Tokyo 100-6150 (JP)
(74) Representative: Hoffmann Eitle
(86) International application number: PCT/JP2023/032552
(87) International publication number: WO 2025/052592

(57) **Abstract**

A network node includes a reception unit configured to receive, from a terminal, a subscriber identifier, an operational profile including a common key, an additional operational profile including a subscriber information type identifier, and a digital certificate certifying that the operational profile and the additional operational profile are issued by a first network node; a control unit configured to use the digital certificate to confirm that the operational profile and the additional operational profile are issued by the first network node; and a transmission unit configured to transmit the subscriber identifier, the common key, and the subscriber information type identifier to a second network node.

## Description

### TECHNICAL FIELD

The present invention relates to a network node, a terminal, and a communication method in a communication system.

### BACKGROUND ART

In 3GPP (registered trademark) (3rd Generation Partnership Project), in order to achieve further increase in system capacity, further increase in data transmission speed, further reduction in delay in a wireless section, and the like, a wireless communication system called 5G or New Radio (NR) (hereinafter, the wireless communication system is referred to as "5G" or "NR") has been studied. In 5G, various radio technologies have been studied to satisfy a requirement that a delay of a radio section is set to 1 ms or less while achieving a throughput of 10 Gbps or more.

In NR, a network architecture including 5GC (5G Core Network) corresponding to EPC (Evolved Packet Core) that is the core network in the network architecture of LTE (Long Term Evolution), and NG-RAN (Next Generation-Radio Access Network) corresponding to E-UTRAN (Evolved Universal Terrestrial Radio Access Network) that is RAN (Radio Access Network) in the network architecture of LTE have been studied (for example, Non-Patent Literature 1).

In addition, studies on a future system later than 5G, or 6G, have been started. In the future system, diversified requirements in terms of power consumption, delay, communication speed, and the like are assumed for diversified terminals such as Ambient IoT, such as radio tags, and XR with functions that extend virtual reality.

### CITATION LIST

### NON-PATENT LITERATURES

Non-Patent Literature 1: 3GPP TS 23.501 V18.2.2 (2023-07)
Non-Patent Literature 2: 3GPP TS 23.502 V18.2.0 (2023-06)
Non-Patent Literature 3: 3GPP TS 33.501 V18.2.0 (2023-06)
Non-Patent Literature 4: 3GPP TS 38.331 V17.5.0 (2023-06)
Non-Patent Literature 5: 3GPP TS 29.503 V18.2.0 (2023-06)
Non-Patent Literature 6: 3GPP TS 29.509 V18.1.0 (2023-06)
Non-Patent Literature 7: GSMA, SGP. 21, RSP Architecture, version 3.0, 28 March 2022
Non-Patent Literature 8: GSMA, SGP. 22, RSP Technical Specification, version 3.0, 19 October 2022

### SUMMARY OF INVENTION

### TECHNICAL PROBLEMN

In 6G, which is a future system later than 5G, a network architecture in which all network devices are deployed on a satellite is being studied. Here, it is necessary to store, in a network device deployed on a satellite, a common key used for mutual authentication when a terminal connects to a network.

However, a procedure for safely transmitting the common key to the network device deployed on the satellite is not defined. If the common key cannot be used on the network side, even a terminal equipped with an appropriate USIM (Universal Subscriber Identity Module) or eSIM (embedded Subscriber Identity Module) cannot use the network.

The present invention is made in view of the above points, and it is an object of the present invention to define, in a communication system, a procedure for appropriately connecting a terminal to a network in which network devices are deployed on a satellite.

### SOLUTION TO PROBLEM

According to the disclosed technology, there is provided a network node including: a reception unit configured to receive, from a terminal, a subscriber identifier, an operational profile including a common key, an additional operational profile including a subscriber information type identifier, and a digital certificate certifying that the operational profile and the additional operational profile are issued by a first network node; a control unit configured to use the digital certificate to confirm that the operational profile and the additional operational profile are issued by the first network node; and a transmission unit configured to transmit the subscriber identifier, the common key, and the subscriber information type identifier to a second network node.

### ADVANTAGEOUS EFFECTS OF INVENTION

According to the disclosed technology, in a communication system, a procedure for proper connection of a terminal to a network in which network devices are deployed on a satellite can be defined.

### BRIEF DESCRIPTION OF DRAWINGS

[FIG. 1] FIG. 1 is a diagram for explaining an example of a communication system.
[FIG. 2] FIG. 2 is a diagram for explaining an example of a communication system in a roaming environment.
[FIG. 3] FIG. 3 is a diagram showing an example of a first sequence diagram according to an embodiment of the present invention.
[FIG. 4] FIG. 4 is a diagram showing an example of a second sequence diagram according to an embodiment of the present invention.
[FIG. 5] FIG. 5 is a diagram showing an example of a functional configuration of each of a base station 10 and a network node 30 according to an embodiment of the present invention.
[FIG. 6] FIG. 6 is a diagram showing an example of a functional configuration of a terminal 20 according to an embodiment of the present invention.
[FIG. 7] FIG. 7 is a diagram showing an example of a hardware configuration of each of the base station 10, the terminal 20, and the network node 30 according to an embodiment of the present invention.
[FIG. 8] FIG. 8 is a diagram showing an example of a configuration of a vehicle 2001 according to an embodiment of the present invention.

### DESCRIPTION OF EMBODIMENTS

Hereinafter, embodiments of the present invention will be described with reference to the drawings. Note that the embodiments described below are merely examples, and embodiments to which the present invention is applied are not limited to the following embodiments.

In the operation of a wireless communication system according to an embodiment of the present invention, an existing technology is appropriately used. The existing technology is, for example, an existing LTE, but is not limited to the existing LTE. The term "LTE" used herein has a broad meaning including LTE-Advanced, a system after LTE-Advanced (e.g., NR), or a wireless LAN (Local Area Network) unless otherwise specified.

Further, in the embodiment of the present invention, a wireless parameter or the like is "configured" may mean that a predetermined value is pre-configured or that a wireless parameter notified from a network node 30 or a terminal 20 is configured.

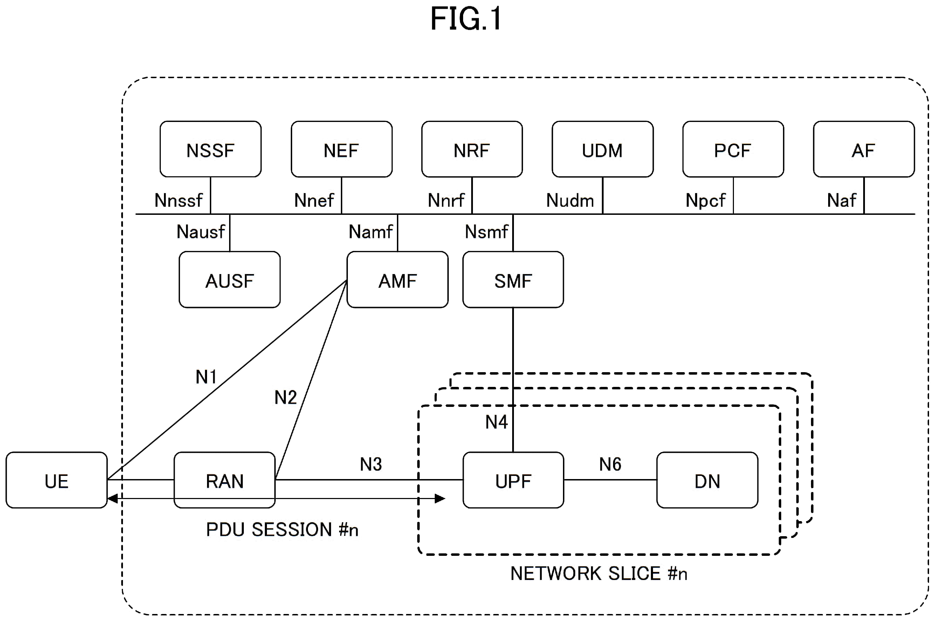

FIG. 1 is a diagram for explaining an example of a communication system. As shown in FIG. 1, the communication system includes UE serving as a terminal 20 and a plurality of network nodes 30. Hereinafter, it is assumed that each function is implemented by one network node 30, but a plurality of functions may be implemented by one network node 30 or one function may be implemented by a plurality of network nodes 30. Further, the term "connection" described below may be a logical connection or a physical connection.

A RAN (Radio Access Network) is a network node 30 having a wireless access function, may include a base station 10, and is connected to the UE, an AMF (Access and Mobility Management Function), and a UPF (User Plane Function). The AMF is a network node 30 having functions such as termination of a RAN interface, termination of NAS (Non-Access Stratum), registration management, connection management, reachability management, and mobility management. The UPF is a network node 30 having functions such as a PDU (Protocol Data Unit) session point to the outside interconnected with a DN (Data Network), routing and forwarding of packets, and QoS (Quality of Service) handling of a user plane. The UPF and the DN constitute a network slice. In a wireless communication network in the embodiment of the present invention, a plurality of network slices are constructed.

The AMF is connected to the UE, the RAN, a SMF (Session Management function), an NSSF (Network Slice Selection Function), an NEF (Network Exposure Function), an NRF (Network Repository Function), a UDM (Unified Data Management), an AUSF (Authentication Server Function), a PCF (Policy Control Function), and an AF (Application Function). The AMF, the SMF, the NSSF, the NEF, the NRF, the UDM, the AUSF, the PCF, and the AF are network nodes 30 connected to each other via interfaces Namf, Nsmf, Nnssf, Nnef, Nnrf, Nudm, Nausf, Npcf, and Naf based on the respective services.

The SMF is a network node 30 having functions such as session management, IP (Internet Protocol) address allocation and management of the UE, a DHCP (Dynamic Host Configuration Protocol) function, an ARP (Address Resolution Protocol) proxy, and a roaming function. The NEF is a network node 30 having a function of notifying capabilities and events to another NF (Network Function). The NSSF is a network node 30 having functions such as selecting a network slice to which the UE is to be connected, determining NSSAI (Network Slice Selection Assistance Information) to be allowed, determining an NSSAI to be configured, and determining an AMF set to which the UE is to be connected. The PCF is a network node 30 having a function for controlling the policy of a network. The AF is a network node 30 having a function for controlling an application server. The NRF is a network node 30 having a function for discovering an NF instance that provides a service. The UDM is a network node 30 for managing subscriber data and authentication data. The UDM is connected to a User Data Repository (UDR) that holds the data. Further, the UDM may also have an ARPF (Authentication credential Repository and Processing Function) having a function for processing and managing authentication information and a SIDF (Subscription Identifier De-concealing Function) having a function for decrypting encrypted identification information. Alternatively, the UDM may execute these functions by accessing another network node having an ARPF or a SIDF.

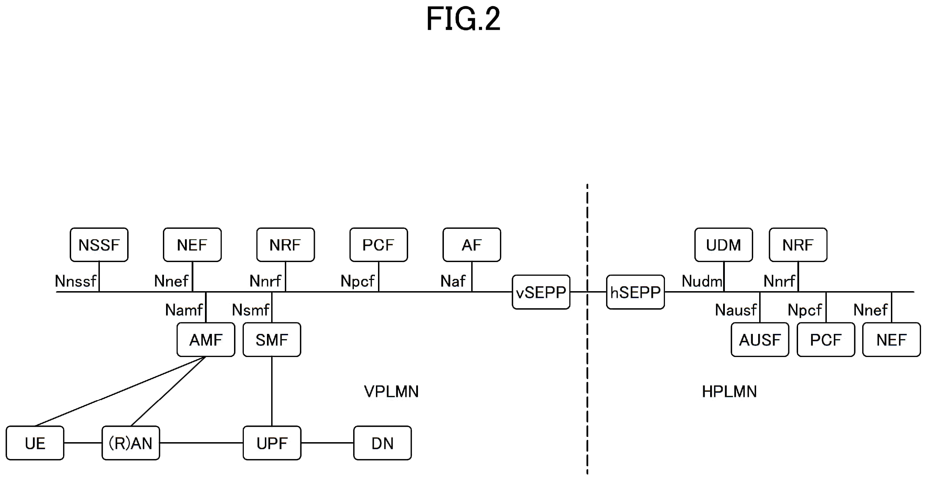

FIG. 2 is a diagram for explaining an example of a communication system in a roaming environment. As shown in FIG. 2, a network is configured with UE serving as a terminal 20 and a plurality of network nodes 30. Hereinafter, it is assumed that each function is implemented by one network node 30, but a plurality of functions may be implemented by one network node 30 or one function may be implemented by a plurality of network nodes 30. Further, the term "connection" described below may be a logical connection or a physical connection.

A RAN is a network node 30 having a wireless access function, and is connected to the UE, an AMF, and a UPF. The AMF is a network node 30 having functions such as termination of a RAN interface, termination of NAS, registration management, connection management, reachability management, and mobility management. The UPF is a network node 30 having functions such as a PDU session point to the outside interconnected with a DN, routing and forwarding of packets, and QoS handling of a user plane. The UPF and the DN constitute a network slice. In a wireless communication network according to the embodiment of the present invention, a plurality of network slices are constructed.

The AMF is connected to the UE, the RAN, a SMF, an NSSF, an NEF, an NRF, a UDM, an AUSF, a PCF, an AF, and an SEPP (Security Edge Protection Proxy). The AMF, the SMF, the NSSF, the NEF, the NRF, the UDM, the AUSF, the PCF, and the AF are network nodes 30 connected to each other via interfaces Namf, Nsmf, Nnssf, Nnef, Nnrf, Nudm, Nausf, Npcf, and Naf based on the respective services.

The SMF is a network node 30 having functions such as session management, IP address allocation and management of the UE, a DHCP function, an ARP proxy, and a roaming function. The NEF is a network node 30 having functions for notifying capabilities and events to another NF. The NSSF is a network node 30 having functions such as selecting a network slice to which the UE is to be connected, determining NSSAI to be allowed, determining NSSAI to be configured, and determining an AMF set to which the UE is to be connected. The PCF is a network node 30 having a function for controlling the policy of a network. The AF is a network node 30 having a function for controlling an application server. NRF is a network node 30 having a function for discovering an NF instance that provides a service. The SEPP is a non-transparent proxy that filters control plane messages between PLMNs (Public Land Mobile Networks). A vSEPP shown in FIG. 2 is an SEPP in a visited network, and an hSEPP is a SEPP in a home network.

As shown in FIG. 2, the UE is in a roaming environment connected to the RAN and the AMF in a VPLMN (Visited PLMN). The VPLMN and the HPLMN (Home PLMN) are connected via the vSEPP and the hSEPP. The UE can communicate with the UDM of the HPLMN via the AMF of the VPLMN, for example.

### (First Embodiment)

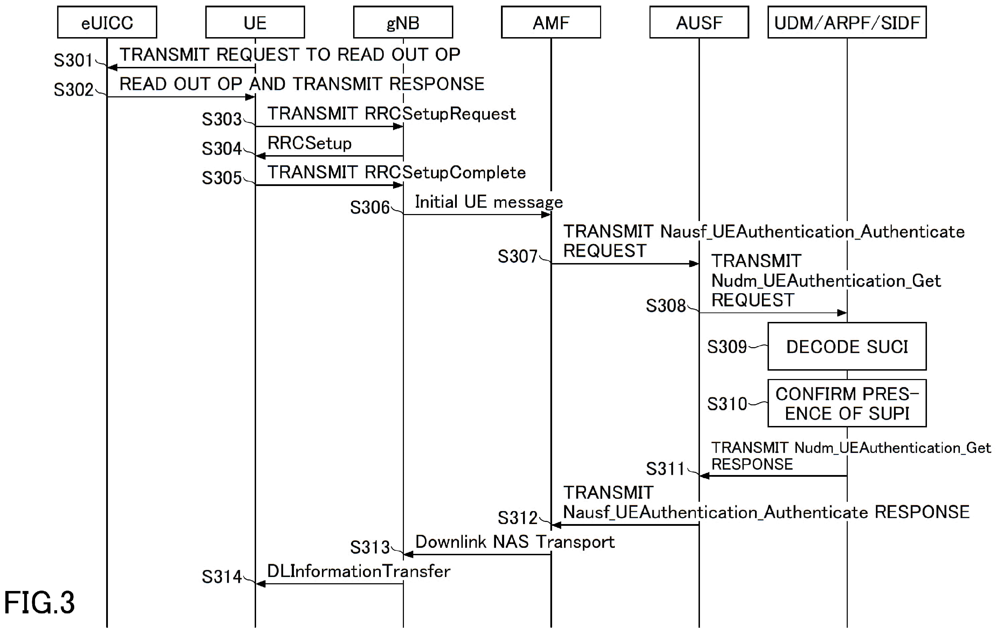

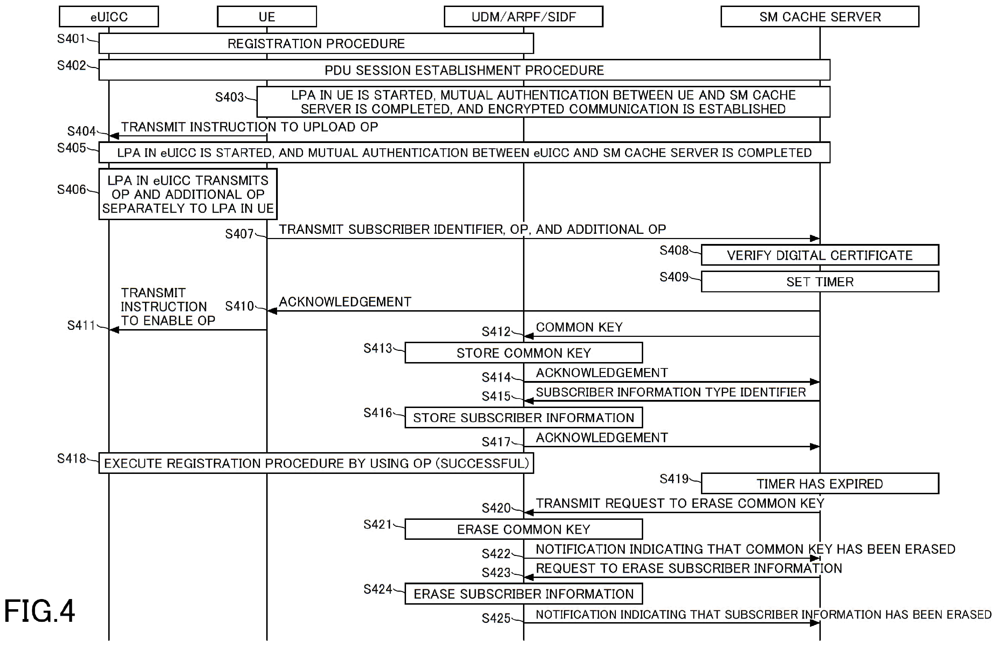

A first embodiment will be described. In the first embodiment, in a communication system, a procedure for appropriately connecting a terminal to a network in which network devices are deployed on a satellite will be described. FIG. 3 is a diagram showing an example of a first sequence diagram according to an embodiment of the present invention. FIG. 4 is a diagram showing an example of a second sequence diagram according to an embodiment of the present invention. In the sequence diagrams shown in FIG. 3 and FIG. 4, network devices (network nodes 30 such as gNB (a base station 10), an AMF, an AUSF, a UDM/ARPF/SIDF, an SMF, and a UPF as shown in FIG. 1 and FIG. 2 are deployed on a satellite. In addition, an SM (Subscription Manager) cache server for temporarily acquiring and managing subscriber information from a terminal 20 is deployed on the satellite instead of an SM deployed in a normal network.

Further, an eUICC (embedded universal integrated circuit card) shown in FIG. 3 and FIG. 4 has a configuration profile (provisional profile, PP), an operational profile (OP), and an additional operational profile (additional OP). The configuration profile (PP) is a profile used to perform a pre-configuration before starting to use a network, using the operational profile (OP). The operational profile (OP) is a profile used to utilize a service of a mobile operator. The OP includes a common key used in mutual authentication performed when the terminal 20 connects to the network. The additional operational profile (additional OP) includes an identifier (a subscriber information type identifier) for identifying the type of subscriber information, and a digital certificate certifying that information such as the OP is issued by the SM cache server. The subscriber information type identifier is, for example, an identifier for identifying the type of service (information about the amount of data that can be communicated per month, communication speed, and the like) for which a subscriber has a contract.

In addition, information on an IP (internet protocol) address or a FQDN (fully qualified domain name) necessary to access the SM cache server is configured in advance in the terminal 20.

First, a registration procedure of the terminal 20 for a new subscriber using the operational profile (OP) will be described with reference to the sequence diagram of FIG. 3.

Step S301: The terminal 20 transmits a request to read out the OP to the eUICC.

Step S302: The eUICC reads out the OP and transmits a response to the received request to the terminal 20. Furthermore, the terminal 20 uses the read-out OP to start a registration procedure for connecting to the network. For processing of the registration procedure executed in the subsequent steps, section 4.2.2.2 of Non-Patent Literature 2 can be referenced. For a procedure related to authentication in the registration procedure (steps S307 to S312), section 6 of Non-Patent Literature 3 can be referenced.

Step S303: The terminal 20 transmits RRCSetupRequest to the base station 10. This message is a message based on an RRC protocol (Non-Patent Literature 4 can be referenced). This message may be referred to as a wireless connection configuration request message.

Step S304: The base station 10 transmits RRCSetup to the terminal 20.

Step S305: The terminal 20 transmits RRCSetupComplete to the base station 10. This message includes a SUCI (subscription concealed identifier), which is a subscriber identifier for the terminal 20 requesting registration with the network.

Step S306: The base station 10 transmits an initial UE message to the AMF. This message includes the SUCI received in step S305. This message may also be referred to as an initial terminal message.

Step S307: The AMF transmits a Nausf_UEAuthentication_Authenticate request to the AUSF. This message includes the SUCI received in step S306.

Step S308: The AUSF transmits a Nudm_UEAuthentication_Get request to the UDM. This message includes the SUCI received in step S307.

Step S309: The UDM causes the SIDF to decode the SUCI received in step S307 and acquire a SUPI (subscription permanent identifier).

Step S310: The UDM and/or the ARPF confirm that information corresponding to the SUPI acquired in step S309 is not held.

Step S311: The UDM transmits a Nudm_UEAuthentication_Get response to the AUSF. This message includes a response code (404 Not Found (USER NOT FOUND), Section 6.3.3.4.3 of Non-Patent Literature 5 can be referenced) corresponding to the confirmation result in step S310 and indicating that the user cannot be found.

Step S312: The AUSF transmits a Nausf_UEAuthentication_Authenticate response to the AMF. This message includes a response code (404 Not Found (USER NOT FOUND), section 6.1.3.2.3 of Non-Patent Literature 6 can be referenced) corresponding to the confirmation result in step S310 and indicating that the user cannot be found.

Step S313: The AMF transmits Downlink NAS Transport to the base station 10. This message includes information indicating that registration is rejected because the terminal 20 requesting the registration with the network is an illegal terminal (illegal UE).

Step S314: The base station 10 transmits DLInformationTransfer to the terminal 20. This message includes information indicating that the registration is rejected because the terminal 20 requesting the registration with the network is an illegal terminal (illegal UE).

As shown in the above processing, the registration with the network requested by the terminal 20 using the operational profile (OP) is rejected by the network because information about the new subscriber of the terminal 20 is not registered with the network.

Next, with reference to the sequence diagram of FIG. 4, a registration procedure using the configuration profile (PP), which is executed for performing a pre-configuration before the new subscriber starts to use the network using the operational profile (OP), will be described.

Step S401: The terminal 20 reads out the PP from the eUICC and requests registration with the network by the same procedure as that described in the sequence diagram of FIG. 3, thereby executing the registration procedure of the terminal 20. Here, the SUPI used in the registration procedure using the PP is registered with the network, and thus the registration procedure succeeds.

Step S402: A PDU session establishment procedure (section 4.3.2 of Non-Patent Literature 2 can be referenced) using the PP is executed between the terminal 20 and the network.

Step S403: An LPA (local profile assistant, Non-Patent Literatures 6 and 7 can be referenced) in the terminal 20 is started, mutual authentication between the terminal 20 and the SM cache server is completed, and encrypted communication is established.

Step S404: The terminal 20 transmits, to the eUICC, an instruction to upload the operational profile (OP) to the network.

Step S405: An LPA in the eUICC is started, and mutual authentication between the eUICC and the SM cache server is completed.

Step S406: The LPA in the eUICC transmits the OP and the additional OP to the LPA in the terminal 20. Here, data of the OP and data of the additional OP may be separately transmitted.

Step S407: The terminal 20 transmits the OP and the additional OP to the SM cache server. Here, the OP includes a subscriber identifier (e.g., the SUPI) and a common key used in mutual authentication performed when the terminal 20 connects to the network. Further, the additional OP includes an identifier (a subscriber information type identifier) for identifying the type of subscriber information, and a digital certificate certifying that information such as the OP is issued by an SM. For example, the digital certificate may be a certificate with a signature generated by using a private key possessed by the SM for at least one of the subscriber identifier, the common key, or the subscriber information type identifier. Further, because mutual authentication is completed and encrypted communication is established between the terminal 20 and the SM cache server in step S403, it is possible to transmit and receive secure information between the terminal 20 and the SM cache server while preventing spoofing and data leakage. Further, the subscriber identifier, the common key, and the subscriber information type identifier may be referred to as information defining the new subscriber.

Step S408: The SM cache server verifies the digital certificate received in step S407 so as to confirm that the information received in step S407 is issued by the SM.

Step S409: The SM cache server stores the information (the subscriber identifier, the common key, and the subscriber information type identifier) received in step S407, sets a timer indicating a period of time until a request to erase the received information is transmitted, and starts the timer. The timer may be a timer indicating a period of time until a request to erase the received information or a part of the received information, which is transmitted to another network node (such as the UDM), is transmitted.

Step S410: The SM cache server transmits, to the terminal 20, an acknowledgement notifying that the OP and the additional OP have been received.

Step S411: The terminal 20 transmits an instruction to switch from the PP to the OP (enable the OP) to the eUICC.

Step S412: The SM cache server transmits the subscriber identifier and the common key received in step S407 to the UDM.

Step S413: The UDM causes the ARPF to store the common key, received in step S407, in association with the subscriber identifier.

Step S414: The UDM transmits, to the SM cache server, an acknowledgement notifying that the subscriber identifier and the common key have been received.

Step S415: The SM cache server transmits the subscriber identifier and the subscriber information type identifier received in step S407 to the UDM.

Step S416: The UDM derives subscriber information of the subscriber, identified by the subscriber identifier, by using the subscriber information type identifier received in step S415, and stores the derived subscriber information in association with the subscriber identifier. For example, the UDM derives subscriber information including information about the amount of data that can be communicated per month and the communication speed corresponding to the type of service for which the subscriber has a contract, which is identified by the subscriber information type identifier, and stores the derived subscriber information in association with the subscriber identifier. Here, the UDM stores the subscriber information corresponding to the subscriber information type identifier as a database in advance, and thus the terminal 20 only needs to transmit the subscriber information type identifier to the UDM without transmitting the subscriber information. Accordingly, because it is not necessary to transmit the subscriber information including a large amount of information, the amount of information to be transmitted can be reduced.

Step S417: The UDM transmits, to the SM cache server, an acknowledgement notifying that the subscriber identifier and the subscriber information type identifier have been received.

Step S418: According to a procedure similar to that described in the sequence diagram of FIG. 3, the terminal 20 uses the OP to request registration with the network, thereby executing the registration procedure of the terminal 20. Because the SUPI used in the registration procedure by the OP is registered with the network in the above procedure, the registration procedure succeeds.

Step S419: The SM cache server detects that the timer set in step S409 has expired. Further, the SM cache server erases the information (the subscriber identifier, the common key, and the subscriber information) stored in step S409.

Step S420: The SM cache server transmits, to the UDM, a request to erase the subscriber identifier and the common key transmitted in step S412.

Step S421: The UDM causes the ARPF to erase the subscriber identifier and the common key stored in step S413.

Step S422: The UDM transmits, to the SM cache server, a notification indicating that the subscriber identifier and the common key have been erased.

Step S423: The SM cache server transmits, to the UDM, a request to erase the subscriber identifier and the subscriber information corresponding to the subscriber information type identifier transmitted in step S415.

Step S424: The UDM erases the subscriber identifier and the subscriber information stored in step S416.

Step S425: The UDM transmits, to the SM cache server, a notification indicating that the subscriber identifier and the subscriber information have been erased. In this manner, information leakage can be prevented by erasing the common key and the subscriber information after the set timer expires.

According to the above-described embodiments, in a communication system, a procedure for appropriately connecting a terminal to a network in which network devices are deployed on a satellite can be defined.

### (Device Configuration)

Next, example functional configurations of the base station 10, a network node 30, and the terminal 20, which perform the above-described processing and operations, will be described. The base station 10, the network node 30, and the terminal 20 include functions for implementing the above-described embodiments. However, each of the base station 10, the network node 30, and the terminal 20 may include only some of the functions in the embodiments.

### <Base Station 10 and Network Node 30>

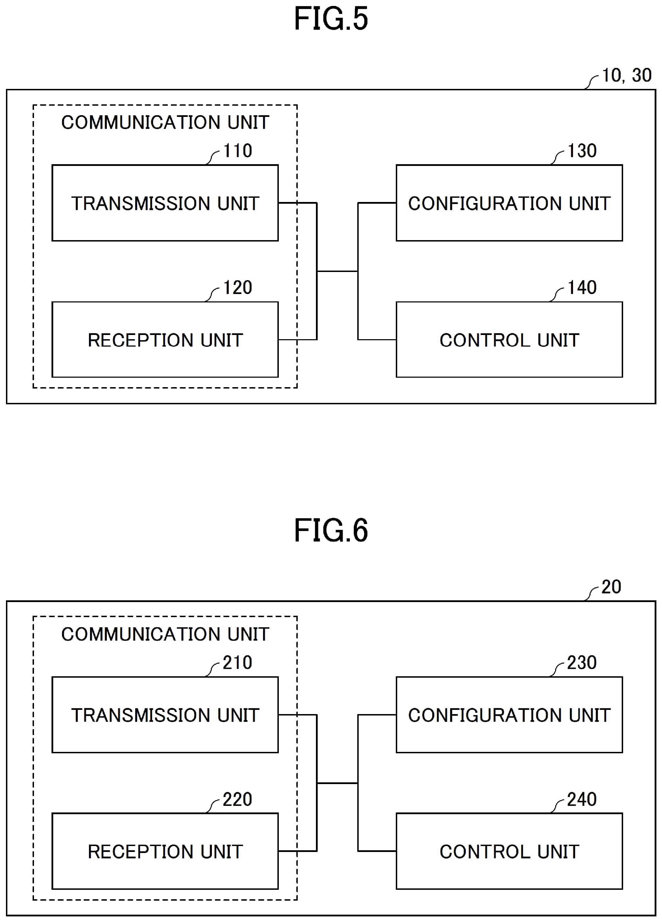

FIG. 5 is a diagram showing an example of a functional configuration of each of the base station 10 and the network node 30. As shown in FIG. 5, the base station 10 includes a transmission unit 110, a reception unit 120, a configuration unit 130, and a control unit 140. The functional configuration illustrated in FIG. 5 is merely an example. Functional divisions and names of functional units may be anything as long as operations according to an embodiment of the present invention can be performed. The network node 30 may have the same functional configuration as the base station 10. Further, the network node 30 having a plurality of different functions in the system architecture may be composed of a plurality of network nodes 30 separated for each function.

The transmission unit 110 has a function for generating a signal to be transmitted to the terminal 20 or another network node 30 and transmitting the signal in a wired manner or a wireless manner. The reception unit 120 has a function for receiving various signals transmitted from the terminal 20 or another network node 30 and acquiring, for example, information of a higher layer from the received signals. A communication unit including the transmission unit 110 and the reception unit 120 may be configured.

The configuration unit 130 stores preset configuration information and various pieces of configuration information to be transmitted to the terminal 20 in a storage apparatus and reads them from the storage apparatus as necessary.

The control unit 140 performs processing related to a registration procedure of the terminal 20 as described in an embodiment of the present invention. Further, the control unit 140 performs processing related to communication with the terminal 20. A functional unit related to signal transmission in the control unit 140 may be included in the transmission unit 110, and a functional unit related to signal reception in the control unit 140 may be included in the reception unit 120.

### <Terminal 20>

FIG. 6 is a diagram showing an example of a functional configuration of the terminal 20. As shown in FIG. 6, the terminal 20 includes a transmission unit 210, a reception unit 220, a configuration unit 230, and a control unit 240. The functional configuration illustrated in FIG. 6 is merely an example. Functional divisions and names of functional units may be anything as long as operations according to an embodiment of the present invention can be performed. A communication apparatus serving as a resource holder 20 may have the same functional configuration as the terminal 20.

The transmission unit 210 generates a transmission signal from transmission data and transmits the transmission signal wirelessly. The reception unit 220 receives various signals wirelessly and acquires higher layer signals from the received physical layer signals. Further, the reception unit 220 has a function for receiving a control signal, a reference signal, or the like transmitted from the network node 30. A communication unit including the transmission unit 210 and the reception unit 220 may be configured.

The configuration unit 230 stores various kinds of configuration information received from the network node 30 by the reception unit 220 in a storage apparatus, and reads out the configuration information from the storage apparatus as necessary. Further, the configuration unit 230 stores pre-configured configuration information.

The control unit 240 performs processing related to a registration procedure, processing for safely transmitting a common key to a network, and the like as described in an embodiment of the present invention. A functional unit related to signal transmission in the control unit 240 may be included in the transmission unit 210, and a functional unit related to signal reception in the control unit 240 may be included in the reception unit 220.

### (Hardware Configuration)

The block diagrams that have been used to describe the above embodiments (FIG. 5 and FIG. 6) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

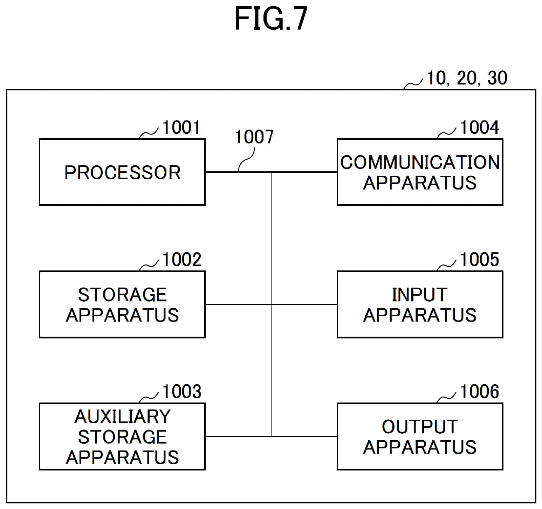

For example, the base station 10, the network node 30, the terminal 20, and the like according to an embodiment of the present disclosure may function as a computer for processing a radio communication method of the present disclosure. FIG. 7 is a diagram illustrating an example of a hardware structure of each of the base station 10 and the terminal 20 according to one embodiment of the present disclosure. The network node 30 may have the same hardware configuration as the base station 10. Physically, the above-described base station 10 and terminal 20 may each be formed as a computer apparatus that includes a processor 1001, a storage apparatus 1002, an auxiliary storage apparatus 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminal 20 is implemented, for example, by allowing certain software (programs) to be read on hardware such as the processor 1001 and the storage apparatus 1002, and by allowing the processor 1001 to perform calculations to control communication via the communication apparatus 1004 and control at least one of reading or writing of data in the storage apparatus 1002 and the auxiliary storage apparatus 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the auxiliary storage apparatus 1003 and the communication apparatus 1004, into the storage apparatus 1002, and executes various processes according to these. As for the programs, programs to allow computers to execute at least part of the operations of the above-described embodiments are used. For example, the control unit 140 of the base station 10 illustrated in FIG. 5 may be implemented by control programs that are stored in the storage apparatus 1002 and that operate on the processor 1001. In addition, for example, the control unit 240 of the terminal 20 illustrated in FIG. 6 may be implemented by control programs that are stored in the storage apparatus 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage apparatus 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The storage apparatus 1002 may be referred to as a "register," a "cache," a "main memory (primary storage apparatus)" and so on. The storage apparatus 1002 can store executable programs (program codes), software modules, and the like for implementing the communication method according to one embodiment of the present disclosure.

The auxiliary storage apparatus 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the storage apparatus 1002 and/or the auxiliary storage apparatus 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the storage apparatus 1002, and others, are connected by a bus 1007 for communicating information. The bus 1007 may be formed with a single bus, or may be formed with buses that vary between pieces of apparatus.

Furthermore, the base station 10 and the terminal 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

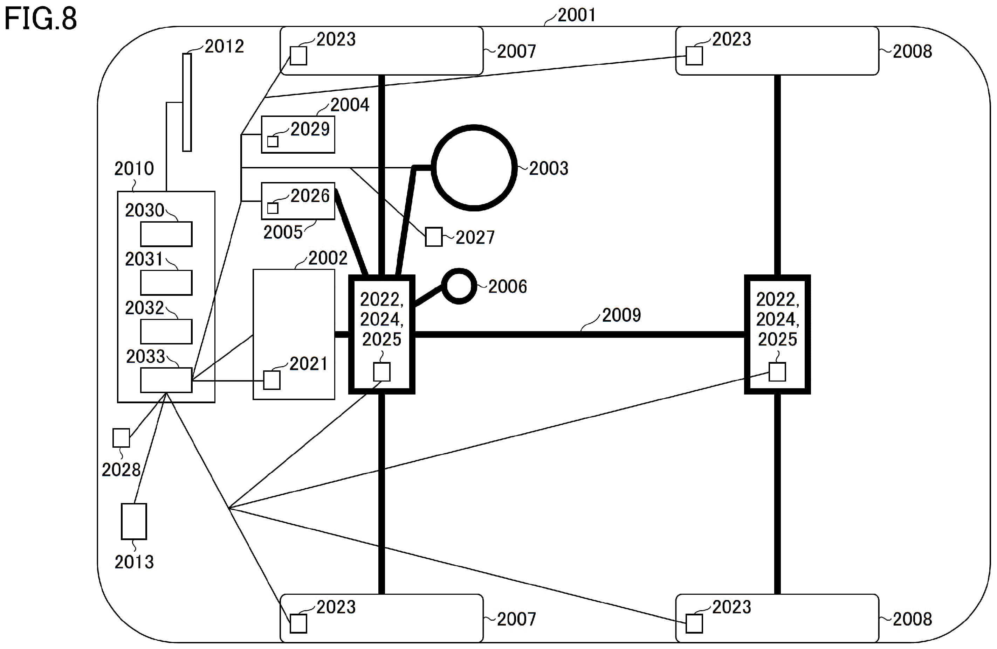

FIG. 8 shows an example of a configuration of a vehicle 2001. As shown in FIG. 8, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021-2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, etc., mounted in the vehicle 2001.

### (Summary of Embodiments)

As described above, according to an embodiment of the present invention, there is provided a network node including: a reception unit configured to receive, from a terminal, a subscriber identifier, an operational profile including a common key, an additional operational profile including a subscriber information type identifier, and a digital certificate certifying that the operational profile and the additional operational profile are issued by a first network node; a control unit configured to use the digital certificate to confirm that the operational profile and the additional operational profile are issued by the first network node; and a transmission unit configured to transmit the subscriber identifier, the common key, and the subscriber information type identifier to a second network node.

According to the above-described configuration, in a communication system, a procedure for proper connection of a terminal to a network in which network devices are deployed on a satellite can be defined.

The control unit may set a timer indicating a period of time until a request to erase the common key and subscriber information corresponding to the subscriber identifier is transmitted to the second network node, and the transmission unit may transmit the request to erase the common key and the subscriber information to the second network node after expiration of the timer.

According to the above-described configuration, in a communication system, a procedure for proper connection of a terminal to a network in which network devices are deployed on a satellite can be defined.

According to an embodiment of the present invention, there is provided a network node including: a reception unit configured to receive a subscriber identifier, a common key, and a subscriber information type identifier from another network node; and a control unit configured to derive subscriber information by using the common key and the subscriber information type identifier, and store the derived subscriber information in association with the subscriber identifier.

According to the above-described configuration, in a communication system, a procedure for proper connection of a terminal to a network in which network devices are deployed on a satellite can be defined.

The reception unit may receive, from said another network node, a request to erase the common key and the subscriber information, and the control unit may erase the common key and the subscriber information in response to the request.

According to the above-described configuration, in a communication system, a procedure for proper connection of a terminal to a network in which network devices are deployed on a satellite can be defined.

Further, according to an embodiment of the present invention, there is provided a terminal including: a transmission unit configured to transmit, to a network node, a subscriber identifier, an operational profile including a common key, an additional operational profile including a subscriber information type identifier, and a digital certificate certifying that the operational profile and the additional operational profile are issued by another network node; a reception unit configured to receive, from the network node, an acknowledgement notifying that the operational profile and the additional operational profile are received; and a control unit configured to request registration with a network, using the operational profile.

According to the above-described configuration, in a communication system, a procedure for proper connection of a terminal to a network in which network devices are deployed on a satellite can be defined.

Further, according to an embodiment of the present invention, there is provided a communication method executed by a network node, the communication method including: a step of receiving, from a terminal, a subscriber identifier, an operational profile including a common key, an additional operational profile including a subscriber information type identifier, and a digital certificate certifying that the operational profile and the additional operational profile are issued by a first network node; a step of using the digital certificate to confirm that the operational profile and the additional operational profile are issued by the first network node; and a step of transmitting the subscriber identifier, the common key, and the subscriber information type identifier to a second network node.

According to the above-described configuration, in a communication system, a procedure for proper connection of a terminal to a network in which network devices are deployed on a satellite can be defined.

### (Supplement of Embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), Wideband Code Division Multiple Access (W-CDMA (registered trademark)), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

n the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 base station
110 transmission unit
120 reception unit
130 configuration unit
140 control unit
20 terminal
210 transmission unit
220 reception unit
230 configuration unit
240 control unit
30 network node
1001 processor
1002 storage apparatus
1003 auxiliary storage apparatus
1004 communication apparatus
1005 input apparatus
1006 output apparatus
2001 vehicle
2002 drive unit
2003 steering unit
2004 accelerator pedal
2005 brake pedal
2006 shift lever
2007 front wheel
2008 rear wheel
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A network node comprising:
a reception unit configured to receive, from a terminal, a subscriber identifier, an operational profile including a common key, an additional operational profile including a subscriber information type identifier, and a digital certificate certifying that the operational profile and the additional operational profile are issued by a first network node;
a control unit configured to use the digital certificate to confirm that the operational profile and the additional operational profile are issued by the first network node; and
a transmission unit configured to transmit the subscriber identifier, the common key, and the subscriber information type identifier to a second network node.

2. The network node according to claim 1, wherein
the control unit sets a timer indicating a period of time until a request to erase the common key and subscriber information corresponding to the subscriber identifier is transmitted to the second network node, and
the transmission unit transmits the request to erase the common key and the subscriber information to the second network node after expiration of the timer.

3. A network node comprising:
a reception unit configured to receive a subscriber identifier, a common key, and a subscriber information type identifier from another network node; and
a control unit configured to derive subscriber information by using the common key and the subscriber information type identifier, and store the derived subscriber information in association with the subscriber identifier.

4. The network node according to claim 3, wherein
the reception unit receives, from said another network node, a request to erase the common key and the subscriber information, and
the control unit erases the common key and the subscriber information in response to the request.

5. A terminal comprising:
a transmission unit configured to transmit, to a network node, a subscriber identifier, an operational profile including a common key, an additional operational profile including a subscriber information type identifier, and a digital certificate certifying that the operational profile and the additional operational profile are issued by another network node;
a reception unit configured to receive, from the network node, an acknowledgement notifying that the operational profile and the additional operational profile are received; and
a control unit configured to request registration with a network, using the operational profile.

6. A communication method executed by a network node, the communication method comprising:
a step of receiving, from a terminal, a subscriber identifier, an operational profile including a common key, an additional operational profile including a subscriber information type identifier, and a digital certificate certifying that the operational profile and the additional operational profile are issued by a first network node;
a step of using the digital certificate to confirm that the operational profile and the additional operational profile are issued by the first network node; and
a step of transmitting the subscriber identifier, the common key, and the subscriber information type identifier to a second network node.
